# EUROPEAN PATENT SPECIFICATION

(11) **EP 0 989 385 B1**
(45) Date of publication and mention of the grant of the patent: **07.06.2006**
(21) Application number: 99117974.8
(22) Date of filing: 16.09.1999
(51) Int. Cl.: G01C 1/02, G05G 1/10

(54) **Collimating direction controlling apparatus for surveying instrument**
Kollimationsrichtungssteuerungsvorrichtung für Vermessungsinstrument
Dispositif de commande de direction de collimation pour instrument d'arpentage

(30) Priority: 21.09.1998 JP 28609798
(43) Date of publication of application: 29.03.2000
(73) Proprietor: Kabushiki Kaisha TOPCON, Tokyo 174 (JP)
(72) Inventor: Takei, Ryuichi, Tokyo 174 (JP)
(74) Representative: Altenburg, Udo

(56) References cited:
- GB-A- 977 251
- US-A- 1 569 539
- US-A- 4 084 327
- PATENT ABSTRACTS OF JAPAN vol. 1996, no. 11, 29 November 1996 (1996-11-29) & JP 08 184439 A (TOPCON CORP), 16 July 1996 (1996-07-16)
- PATENT ABSTRACTS OF JAPAN vol. 018, no. 135 (P-1705), 7 March 1994 (1994-03-07) & JP 05 322572 A (TOPCON CORP), 7 December 1993 (1993-12-07)
- ANONYMOUS: MACHINE DESIGN, vol. 30, no. 12, 12 June 1958 (1958-06-12), page 126 XP002126063

## Description

### BACKGROUND OF THE INVENTION

The present invention relates to a collimating direction controlling apparatus for a surveying instrument and, more particularly, relates to a collimating direction controlling apparatus for a surveying instrument provided with position controlling means capable of making two-step adjustments to facilitate adjustments of the collimating directions in horizontal and vertical directions.

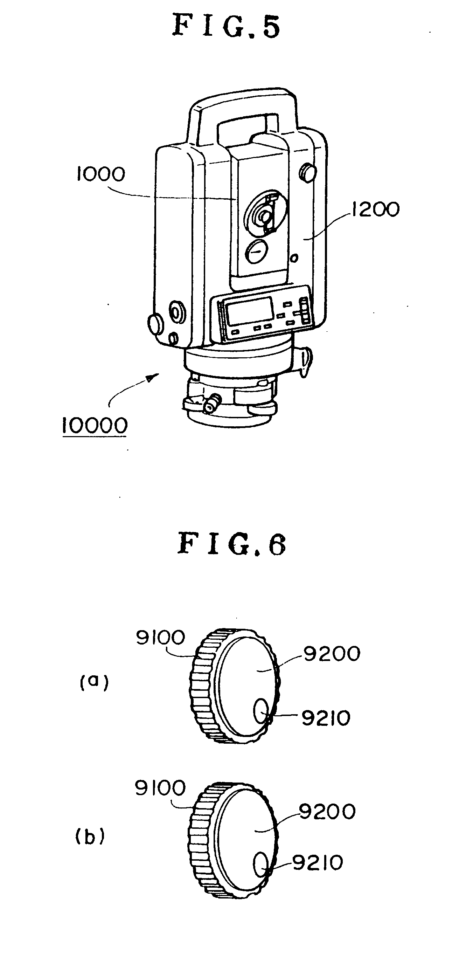

There has so far been in use a surveying instrument capable of adjusting the collimating directions in horizontal and vertical directions by means of electric motor. This type of surveying instrument is provided with motor rotation control means for coarse control of the collimating direction and motor rotation control means for fine control of the collimating direction. As the motor rotation control means for coarse control and the motor rotation control means for fine control, those using a rotary knob as shown in FIG. 6 have been developed, of which the coarse controlling knob 9100 is adapted to adjust the collimating direction at a speed proportional to the angle of rotation of the knob and the fine controlling knob 9200 is adapted to rotate the collimating direction by an amount corresponding to the angle of rotation of the knob.

The fine controlling knob 9200 is designed to be slidingly rotated with a finger applied on a finger-engageable dent 9210 eccentrically provided thereon to thereby make fine adjustment of the collimating direction. The rotation of the fine controlling knob 9200 with finger produces a considerably wide range of change in the adjustment speed.

However, there has been a problem with the conventional collimating direction controlling apparatus for a surveying instrument employing the coarse controlling knob 9100 and the fine controlling knob 9200 that the operation with one finger makes the control very unstable and makes fine adjustment of the collimating direction required of a surveying instrument difficult to achieve.

Further, if there were provided only one finger-engageable dent 9210 originally, it would be operated well to achieve a satisfactory function. However, in the above described case of surveying work, it is required to operate either the coarse controlling knob 9100 or the fine controlling knob 9200 while making the collimating work. Hence, such a problem arises that the collimating direction passes from view while feeling about with finger for a right finger-engageable dent 9210.

Such a collimating direction controlling apparatus is disclosed in JP 5322572.

### SUMMARY OF THE INVENTION

The present invention provides a collimating direction controlling apparatus for a surveying instrument adjusting, at least, either the horizontal collimating direction or the vertical collimating direction and comprises a rotating speed control switch of an electric motor and a rotational position control switch of the electric motor, in which speed control means is adapted to control the rotating speed control switch and first position control means and second position control means are adapted to control the rotational position control switch of the electric motor.

The object of the present invention is to provide a collimating direction control apparatus with an improved facility and accuracy of adjustment as claimed in claim 1.

### BRIEF DESCRIPTION OF THE DRAWINGS

The drawings show an embodiment of the present invention, in which:
FIG. 1(a) is a drawing explanatory of the controlling apparatus for the vertical direction;
FIG. 1(b) is a drawing explanatory of the controlling apparatus for the horizontal direction;
FIG. 2(a) is a drawing explanatory of the controlling apparatus for the vertical direction of a modification;
FIG. 2(b) is a drawing explanatory of the controlling apparatus for the horizontal direction of the modification;
FIG. 3 is a structural drawing of the embodiment;
FIG. 4 is a drawing showing the electric configuration of the embodiment;
FIG. 5 is a perspective view showing the embodiment; and
FIG. 6 is a drawing explanatory of a related art.

### DESCRIPTION OF THE INVENTION

An embodiment of the invention will be described with reference to the accompanying drawings.

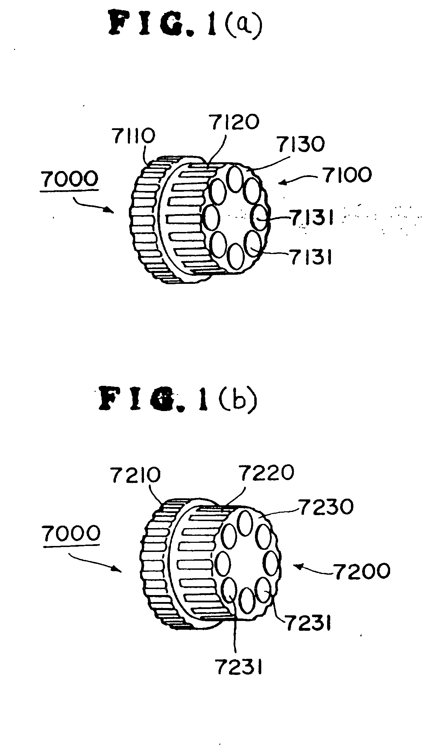

FIG. 1(a) and FIG. 1(b) are drawings showing a collimating direction controlling apparatus 7000 of a surveying instrument 10000 of the embodiment, of which FIG. 1(a) shows a vertical controller 7100 and FIG. 1(b) shows a horizontal controller 7200.

The vertical controller 7100 comprises a coarse control knob 7110 virtually in a circular form and a fine control knob 7120 in a virtually circular form. The coarse control knob 7110 and the fine control knob 7120 are arranged for concentric rotation. The coarse control knob 7110 is made larger in radius than the fine control knob 7120.

The fine control knob 7120 is provided, on the end face 7130 thereof, with a plurality of finger engageable dents 7131 for medium controlling. The term "medium controlling" means controlling of the collimating direction in a medium degree.

The coarse control knob 7110 is connected with a later described vertical coarse control switch 2000. The vertical coarse control switch 2000 corresponds to a rotating speed control switch of an electric motor.

The fine control knob 7120 is connected with a later described vertical fine control switch 3000. The vertical fine control switch 3000 corresponds to a rotational position control switch of the electric motor.

While the coarse control knob 7110 corresponds to speed control means, the fine control knob 7120 corresponds to first position control means and the end face 7130 of the fine control knob 7120 corresponds to second position control means.

In the vertical controller 7100 configured as described above, the operator can first make a coarse adjustment using the coarse control knob 7110, then make an adjustment at a medium speed by inserting a finger in one of the finger engageable dents 7131 formed on the end face 7130 of the fine control knob 7120 to rotate the same, and finally make a precise collimation adjustment in the vertical direction using the fine control knob 7120.

The horizontal controller 7200 shown in FIG. 1(b) is the same in principle of operation with the vertical controller 7100. The horizontal controller 7200 comprises a coarse control knob 7210 virtually in a circular form and a fine control knob 7220 in a virtually circular form.

The fine control knob 7220 is provided on the end face 7230 thereof with a plurality of finger engageable dents 7231 for medium controlling.

The coarse control knob 7210 is connected with a later described horizontal coarse control switch 4000 and the fine control knob 7220 is connected with a later described horizontal fine control switch 5000.

The horizontal coarse control switch 4000 corresponds to a rotating speed control switch of an electric motor and it has a configuration electrically similar to the vertical coarse control switch 2000. The horizontal fine control switch 5000 corresponds to a rotational position control switch of the electric motor and it has a configuration electrically similar to the vertical fine control switch 3000.

Since further details in the configuration and effects of the horizontal controller 7200 are the same as those of the vertical controller 7100, description of the same will be omitted.

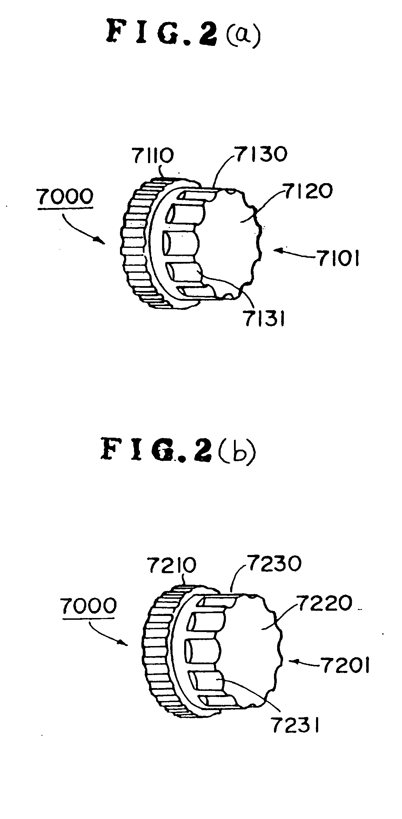

FIG. 2(a) and FIG. 2(b) are drawings showing a modification of the collimating direction controlling apparatus 7000 of a surveying instrument 10000 according to the present embodiment, in which FIG. 2(a) shows a vertical controller 7101 and FIG. 2(b) shows a horizontal controller 7201.

As shown in FIG. 2(a), the vertical controller 7101 of the modification comprises a coarse control knob 7110 in a virtually circular form and a fine control knob 7120 in a virtually circular form.

The coarse control knob 7110 and the fine control knob 7120 are arranged for concentric rotation. The coarse control knob 7110 is made larger in radius than the fine control knob 7120.

The fine control knob 7120 is provided on the periphery 7130 thereof with a plurality of finger engageable dents 7131 for medium controlling.

Since further details in the configuration and effects of the modification are the same as those of the above described embodiment, description of the same will be omitted.

The electrical configuration and the like of the present embodiment will be described below.

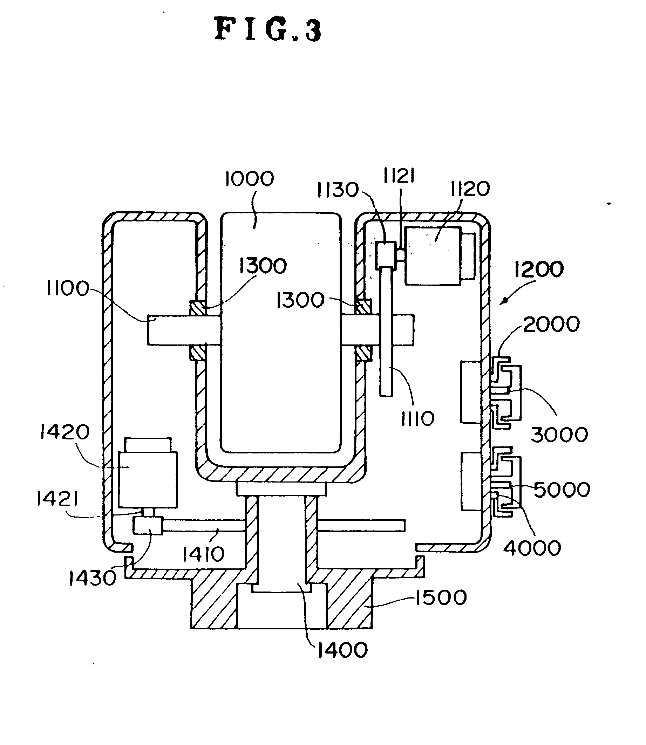

As shown in FIG. 3, the surveying instrument 10000 is supported for vertical rotation on a frame 1200 through a vertical revolving shaft 1100 of a collimating telescope 1000.

The frame 1200 is supported for horizontal rotation on a base 1500 through a horizontal revolving shaft 1400 disposed thereunder.

A first spur gear 1110 is attached to the vertical revolving shaft 1100. A second spur gear 1130 is attached to the driving shaft 1121 of a vertical driving motor 1120, i.e., a pulse motor installed within the frame 1200. The second spur gear 1130 and the first spur gear 1110 engage each other so that the torque of the vertical driving motor 1120 is transmitted to the vertical revolving shaft 1100.

A third spur gear 1410 is attached to the horizontal revolving shaft 1400. A fourth spur gear 1430 is attached to the driving shaft 1421 of a horizontal driving motor 1420 provided by a pulse motor installed within the base 1500. The fourth spur gear 1430 and the third spur gear 1410 engage each other so that the torque of the horizontal driving motor 1420 is transmitted to the horizontal revolving shaft 1400.

On the side wall of the frame 1200, there are disposed a circular vertical coarse control switch 2000 for controlling the vertical driving motor 1120 and a circular vertical fine control switch 3000 disposed in the center thereof.

On the side wall of the frame 1200, there are disposed a circular horizontal coarse control switch 4000 for controlling the horizontal driving motor 1420 and a circular horizontal fine control switch 5000 disposed in the center thereof.

The vertical coarse control switch 2000 and the horizontal coarse control switch 4000 are each formed of a potentiometer and the vertical fine control switch 3000 and the horizontal fine control switch 5000 are each formed of a rotary encoder.

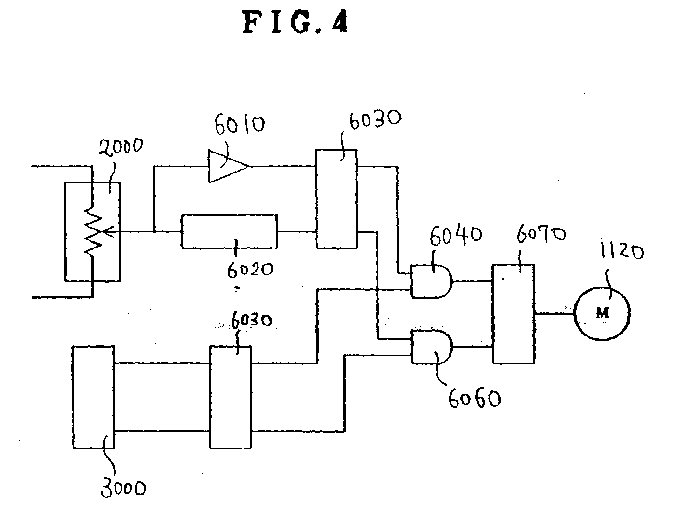

Since the motor drive circuit including the vertical driving motor 1120 and the related switches thereto and the motor drive circuit including the horizontal driving motor 1420 and the related switches thereto are the same, the motor drive circuit including the vertical driving motor 1120 and related switches thereto will be taken up as an example and described below with reference to FIG. 4.

The vertical coarse control switch 2000 formed of a potentiometer is connected with terminals +V volt and -V volt of a power source. The output of the vertical coarse control switch 2000 is supplied to a normal/reverse decision circuit 6030 through a comparator 6010 and a V/F converter 6020. The V/F converter 6020 outputs a pulse at a frequency proportional to the absolute voltage value of the input voltage thereto. The comparator 6010, determining whether the input voltage thereto is plus or minus and deciding as to whether the output of the V/F converter 6020 should be made into a normal rotation pulse or a reverse rotation pulse, outputs a relevant instruction signal to the normal/reverse decision circuit 6030.

The normal rotation pulse output and the negative rotation pulse output from the normal/reverse decision circuit 6030 are connected with their respective gate circuits 6040 and 6060. The outputs of the gate circuits 6040 and 6060 are connected with the pulse motor driver 6070 and the output of the pulse motor driver 6070 is supplied to the vertical driving motor 1120. The vertical driving motor 1120 is provided with drive mechanical means such as a reducing gear device according to the need.

The vertical fine control switch 3000 is an encoder providing two-phase outputs 90 degrees out of phase from each other. Each of the outputs is connected with the normal/reverse decision circuit 6030. The normal rotation pulse output and the reverse rotation pulse output of the normal/reverse decision circuit 6030 are connected with their respective gate circuits 6040 and 6060.

In the above motor drive circuit, when the vertical coarse control switch 2000 is rotated a certain angle, a normal rotation pulse output or a reverse rotation pulse output proportional to the angle of rotation is supplied to the vertical driving motor 1120 so that the vertical driving motor 1120 continues to rotate at the speed proportional to the angle of rotation of the vertical coarse control switch 2000.

When the vertical fine control switch 3000 is rotated a certain angle, the vertical driving motor 1120 is rotated to attain the angular position corresponding to the angle of rotation of the switch.

In the embodiment structured as described above, by rotating the vertical coarse control switch 2000 and the horizontal coarse control switch 4000, the collimating telescope 1000 is caused to continuously rotate at the speed proportional to the angle of rotation of the switch in each collimating direction as shown in FIG. 5. Namely, by rotating the vertical coarse control switch 2000 and the horizontal coarse control switch 4000, the collimating telescope 1000 can be rotated in each collimating direction at a relatively high speed.

Further, by rotating the vertical fine control switch 3000 and the horizontal fine control switch 5000, it is made possible to rotate the collimating telescope 1000 in each collimating direction to attain the position corresponding to the angle of rotation of the switch. Namely, by rotating the vertical fine control switch 3000 and the horizontal fine control switch 5000, it becomes possible to make fine adjustments of the collimating telescope 1000 in each collimating direction.

Although, in the present embodiment, a potentiometer was employed for each of the vertical coarse control switch 2000 and the horizontal coarse control switch 4000 and a rotary encoder for each of the vertical fine control switch 3000 and the horizontal fine control switch 5000, a rotary encoder may be used for each of the vertical coarse control switch 2000 and the horizontal coarse control switch 4000 and a potentiometer for the vertical fine control switch 3000 and the horizontal fine control switch 5000.

The present invention, as described in the foregoing, provides a surveying instrument adjusting, at least, either the horizontal collimating direction or the vertical collimating direction by means of an electric motor. The surveying instrument comprises a rotating speed control switch of an electric motor and a rotational position control switch of the electric motor, in which speed control means is adapted to operate the rotating speed control switch of the electric motor and first position control means and second position control means are adapted to operate the rotation position control switch of the electric motor. Therefore, such an excellent effect can be obtained that the collimating work can be made quickly with high accuracy.

## Claims

1. A collimating direction controlling apparatus (7000) for a surveying instrument (10000) having a telescope, comprising:
a supporting portion (1400) arranged for horizontal rotation by a first motor (1420);
an adjusting portion (1100) for collimating a direction of said telescope and arranged for vertical rotation by a second motor (1120);
first and second control switches (2000, 3000, 4000, 5000), each for controlling a corresponding one of said first and second motors (1420, 1120), each control switch comprises a circular coarse control knob (7110) arranged to control rotational speed of a corresponding motor and a circular fine control knob (7120), arranged concentric to said coarse control knob (7110) and projecting outwardly therefrom, and arranged to cause rotation of said corresponding motor through a rotation angle proportional to a rotation angle applied to said fine control knob (7120),
**characterized by**
said fine control knob (7120) including a radially outer surface and an axial end surface (7130) having a plurality of finger engageable dents (7131) therein, said fine control knob (7120) being arranged to provide fine control of said corresponding motor by an operator manipulating said radially outer surface and medium control of said corresponding motor by an operator manipulating one of said dents (7131).

2. The collimating direction controlling apparatus for a surveying instrument according to claim 1, wherein one of said first control switches (2000) and one of said second control switches (4000) are potentiometers.

3. The collimating direction controlling apparatus for a surveying instrument according to claim 1 wherein one of said first control switches (2000) and one of said second control switches (4000) are rotary encoders.

4. The collimating direction controlling apparatus for a surveying instrument according to claim 2 wherein the other one of said first control switches (3000) and the other one of said second control switches (5000) are rotary encoders.

5. The collimating direction controlling apparatus for a surveying instrument according to claim 3, wherein the other one of said first control switches (3000) and the other one of said second control switches (5000) are potentiometers.

## Patentansprüche

1. Kollimationsrichtungskontrollvorrichtung (7000) für ein Messgerät (10000), das ein Teleskop aufweist, umfassend:
ein Stützteil (1400), das angeordnet ist für horizontale Rotation durch einen ersten Motor (1420);
ein Anpassteil (1100) zum Kollimieren einer Richtung des Teleskops und angeordnet für vertikale Rotation durch einen zweiten Motor (1120);
erste und zweite Kontrollschalter (2000, 3000, 4000, 5000), jeder zum Kontrollieren eines entsprechenden der ersten und zweiten Motoren (1420, 1120), wobei jeder Kontrollschalter einen kreisförmigen Grobkontrollknopf (7110), der angeordnet ist zum Kontrollieren der Rotationsgeschwindigkeit eines entsprechenden Motors, und einen kreisförmigen Feinkontrollknopf (7120) aufweist, der konzentrisch zu dem Grobkontrollknopf (7110) angeordnet ist und davon auswärts herausragt und der angeordnet ist, um Rotation des entsprechenden Motors um einen Rotationswinkel proportional zu dem Rotationswinkel, der auf den Feinkontrollknopf (7120) angewendet wird, zu verursachen,
**gekennzeichnet durch**
den Feinkontrollknopf (7120), der eine radiale äußere Oberfläche und eine axiale Endoberfläche (7130) aufweist, die eine Mehrzahl von fingereingreifbaren Vertiefungen (7131) darin aufweist, wobei der Feinkontrollknopf (7120) angeordnet ist, um Feinkontrolle des entsprechenden Motors durch einen Bediener, der die radial äußere Oberfläche handhabt, und mittlere Steuerung des entsprechenden Motors **durch** einen Bediener, der eine der Vertiefungen (7131) handhabt, bereitzustellen.

2. Kollimationsrichtungskontrollvorrichtung für ein Messgerät nach Anspruch 1, worin einer der ersten Kontrollschaltern (2000) und einer der zweiten Kontrollschaltern (4000) Potentiometer sind.

3. Kollimationsrichtungskontrollvorrichtung für ein Messgerät nach Anspruch 1, worin einer der ersten Kontrollschalter (2000) und einer der zweiten Kontrollschalter (4000) Drehgeber sind.

4. Kollimationsrichtungskontrollvorrichtung für ein Messgerät nach Anspruch 2, worin der andere der ersten Kontrollschalter (3000) und der andere der zweiten Kontrollschalter (5000) Drehgeber sind.

5. Kollimationsrichtungskontrollvorrichtung für ein Messgerät nach Anspruch 3, worin der andere der ersten Kontrollschalter (3000) und der andere der zweiten Kontrollschalter (5000) Potentiometer sind.

## Revendications

1. Un dispositif de contrôle de direction de collimation (7000) pour un instrument de prospection (10000) ayant un télescope, comprenant :
une partie de support (1400) configurée à rotation horizontale par un premier moteur (1420) ;
une partie d'ajustement (1100) pour collimater une direction dudit télescope et configurée à rotation verticale par un second moteur (1120) ;
des premiers et seconds commutateurs de contrôle (2000, 3000, 4000, 5000), chacun pour contrôler l'un correspondant desdits premier et second moteurs (1420, 1120), chaque commutateur de contrôle comprenant un bouton de contrôle grossier circulaire (7110) configuré pour contrôler a vitesse de rotation d'un moteur correspondant, et un bouton de contrôle fin circulaire (7120), configuré concentrique audit bouton de contrôle grossier (7110) et faisant saillie de celui-ci vers l'extérieur, et configuré pour provoquer la rotation dudit moteur correspondant sur un angle de rotation proportionnel à un angle de rotation appliqué audit bouton de contrôle fin (7120),
**caractérisé par le fait que**
ledit bouton de contrôle fin (7120) comprend une surface radialement extérieure et une surface d'extrémité axiale (7130) dans laquelle sont formées une pluralité d'indentations pouvant être saisies par des doigts (7131), ledit bouton de contrôle fin (7120) étant configuré pour permettre un contrôle fin dudit moteur correspondant par un opérateur manipulant ladite surface radialement extérieure et un contrôle moyen dudit moteur correspondant par un opérateur manipulant l'une desdites indentations (7131).

2. Le dispositif de contrôle de direction de collimation pour un instrument de prospection selon la revendication 1, où l'un desdits premiers commutateurs de contrôle (2000) et l'un desdits seconds commutateurs de contrôle (4000) sont des potentiomètres.

3. Le dispositif de contrôle de direction de collimation pour un instrument de prospection selon la revendication 1, où l'un desdits premiers commutateurs de contrôle (2000) et l'un desdits seconds commutateurs de contrôle (4000) sont des codeurs rotatifs.

4. Le dispositif de contrôle de direction de collimation pour un instrument de prospection selon la revendication 2, où l'autre desdits premiers commutateurs de contrôle (3000) et l'autre desdits seconds commutateurs de contrôle (5000) sont des codeurs rotatifs.

5. Le dispositif de contrôle de direction de collimation pour un instrument de prospection selon la revendication 3, où l'autre desdits premiers commutateurs de contrôle (3000) et l'autre desdits seconds commutateurs de contrôle (5000) sont des potentiomètres.
